# EUROPEAN PATENT APPLICATION

(11) **EP 3 667 933 A1**
(43) Date of publication of application: **17.06.2020**
(21) Application number: 18211353.0
(22) Date of filing: 10.12.2018
(51) Int. Cl.: H04B 5/00

(54) **ADAPTIVE NFC RECEIVER SENSITIVITY CONTROL**

(71) Applicant: NXP B.V., 5656 AG Eindhoven (NL)
(72) Inventor: Muehlmann, Ulrich Andreas, 5656 AG Eindhoven (NL); Kormann, Leonhard, 5656 AG Eindhoven (NL)
(74) Representative: Krott, Michel

(57) **Abstract**

There is described a method of operating an NFC reader device to receive data from an NFC card, the method comprising (a) receiving, at the NFC reader device, a data signal transmitted by the NFC card, (b) determining a signal strength of the received data signal, and (c) adapting a receiver sensitivity of the reader device based on the determined signal strength. There is also described an NFC reader device and an NFC communication system.

## Description

### FIELD OF THE INVENTION

The present invention relates to the field of RF communication, in particular to communication between an NFC reader device and an NFC card. More specifically, the present invention relates to a method of operating an NFC reader device to receive data from an NFC card and to a corresponding NFC reader device.

### ART BACKGROUND

State of the art NFC cards and other NFC enabled devices (such as mobile phones) operating in NFC card mode may cause significant levels of electrical disturbance emissions (EMD) which then propagates to the receiver of a nearby reader device. The increasing level of EMD makes it difficult to distinguish between EMD and the actual load modulation (LMA) of the card response. One particular source for EMD is e.g. the security controller (or co-processor) of modern NFC cards. Some known receivers have fixed receiver sensitivity while others set the receiver sensitivity in relation to internal noise measurements.

There may be a need for a way of overcoming the above drawbacks in order to prevent or at least minimize the number of reception fails caused by EMD from the card.

### SUMMARY OF THE INVENTION

This need may be met by the subject matter according to the independent claims. Advantageous embodiments of the present invention are set forth in the dependent claims.

According to a first aspect there is provided a method of operating an NFC reader device to receive data from an NFC card, the method comprising (a) receiving, at the NFC reader device, a data signal transmitted by the NFC card, (b) determining a signal strength of the received data signal, and (c) adapting a receiver sensitivity of the reader device based on the determined signal strength.

This aspect is based on the idea that the strength of the received data signal, i.e. the card response, is used to adapt the receiver sensitivity, e.g. a receiver sensitivity threshold setting. Thereby, reception of the data signal can be optimized.

According to an embodiment, the method further comprises (a) estimating a channel noise level at the reader device, (b) determining an initial receiver sensitivity for the reader device based on the estimated channel noise level, and (c) applying the initial receiver sensitivity to the reader device prior to receiving the data signal transmitted by the NFC card.

The estimated channel noise level may in particular be used for setting a minimum receiver sensitivity.

According to a further embodiment, the step of determining the signal strength comprises (i) obtaining a plurality of signal strength measurement values during the receiving of the data signal, and (ii) processing the plurality of signal strength measurement values.

In other words, the signal strength is monitored for the complete duration of the reception and the obtained plurality of signal strength measurement values is processed in order to determine a resulting value indicative of the signal strength or the received data signal. Thereby, variations during the reception may be taken into account.

According to a further embodiment, the processing comprises determining at least one of a maximum value, a minimum value and an average value based on the plurality of signal strength measurement values.

According to a further embodiment, the step of adapting the receiver sensitivity comprises (i) determining an updated receiver sensitivity based on the determined signal strength, and(ii) applying the updated receiver sensitivity to the reader device prior to receiving a further data signal transmitted by the NFC card.

In other words, the updated receiver sensitivity is used for optimizing reception of a further (subsequent) data signal from the NFC card. During the subsequent reception of the further data signal, the signal strength is again determined in order to be able to adapt the receiver sensitivity to any changes that may occur.

According to a further embodiment, the method further comprises storing the updated receiver sensitivity in a memory of the reader device.

According to a further embodiment, the method further comprises (a) if the determined signal strength is below a lower threshold value: transmitting, from the reader device to the NFC card, a request for increasing transmission signal strength, and/or (b) if the determined signal strength is below an upper threshold value: transmitting, from the reader device to the NFC card, a request for reducing transmission signal strength.

This is particularly useful during communication with active cards in situations where the actual signal strength cannot be fully compensated by a sensitivity adjustment, e.g. in cases where a the required sensitivity adjustment will cause clipping.

According to a second aspect, there is provided an NFC reader device. The device comprises (a) a receiver configured to receive a data signal transmitted by an NFC card, and (b) a processing unit configured to (b1) determine a signal strength of the received data signal, and (b2) adapt a receiver sensitivity of the receiver based on the determined signal strength.

This aspect is essentially based on the same idea as the first aspect described above. In particular, the reader device according to the second aspect is configured to operate in accordance with the method of the first aspect.

According to an embodiment, the device further comprises a channel noise estimator configured to estimate a channel noise level, and the processing unit is further configured to (i) determine an initial receiver sensitivity based on the estimated channel noise level, and (ii) apply the initial receiver sensitivity to the receiver prior to receiving the data signal transmitted by the NFC card.

Furthermore, the processing unit may be configured to perform some or all of the steps and functions described above in conjunction with various embodiments of the method according to the first aspect.

According to a third aspect, there is provided an NFC communication system, comprising (a) an NFC reader device according to the second aspect, and (b) an NFC card configured to transmit a data signal to the NFC reader device.

According to a fourth aspect, there is provided a computer program comprising computer executable instructions which, when executed by a computer, causes the computer to perform the steps of the method according to the first aspect.

According to a fifth aspect, there is provided a computer program product comprising a computer readable data carrier loaded with a computer program according to the fourth aspect.

It should be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular a combination of features of the method type claims and features of the apparatus type claims, is also disclosed with this document.

The aspects defined above and further aspects of the present invention will be apparent from the examples of embodiment to be described hereinafter and are explained with reference to the examples of embodiment. The invention will be described in more detail hereinafter with reference to examples of embodiment to which the invention is, however, not limited.

### BRIEF DESCRIPTION OF THE DRAWING

Figure 1 shows a block diagram of an NFC card and an NFC reader in accordance with an embodiment.
Figure 2 shows a flow diagram illustrating communication between an NFC card and an NFC reader in accordance with an embodiment.

### DETAILED DESCRIPTION

The illustration in the drawing is schematic. It is noted that in different figures, similar or identical elements are provided with the same reference signs or with reference signs, which differ only within the first digit.

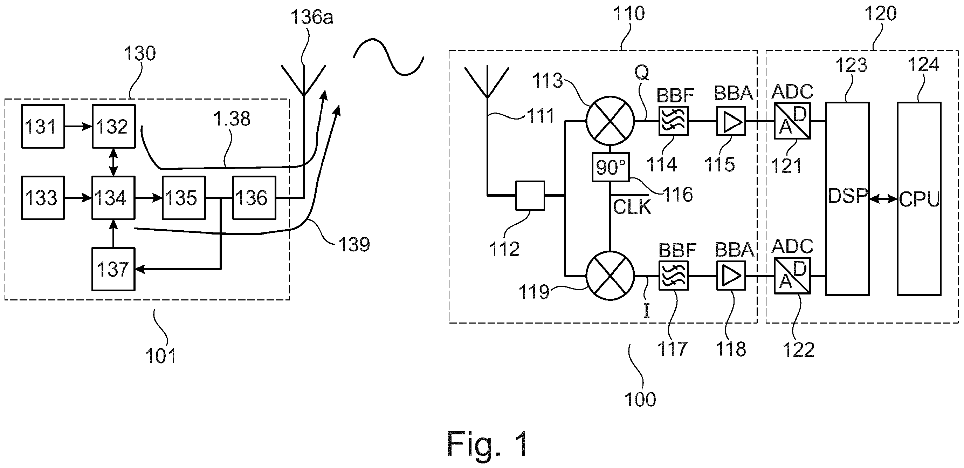

Figure 1 shows a block diagram of an NFC card 101 and an NFC reader 100 in accordance with an embodiment. More specifically, the NFC reader 100 comprises an analog frontend 110 and a digital backend 120. The analog frontend 110 comprises an antenna 111, an HF attenuation unit 112 and circuitry for generating an in-phase signal part I and a quadrature-phase signal part Q. The quadrature-phase circuitry comprises a multiplicator 113, a baseband filter 114, a baseband amplifier 115 and a 90° phase shift unit coupled to clock CLK. Similarly, the in-phase circuitry comprises a multiplicator 119, a baseband filter 117, and a baseband amplifier 118. The digital backend comprises an analog-to-digital converter 121 coupled to receive the filtered and amplified quadrature-phase signal part, an analog-to-digital converter 122 coupled to receive the filtered and amplified in-phase signal part, a digital signal processor 123, and a central processing unit 124. The CPU 124 is configured to control the receiver sensitivity in accordance with the present invention as will be described in more detail later.

The NFC card 101 comprises card circuitry 130, which comprises a first memory unit 131 coupled to a security processing unit 132, a second memory unit 133 coupled to digital processing unit 134, which is also coupled to the security processing unit 132, modulator 135, and antenna matching circuit 136 for transmitting and receiving RF signals through antenna 136a. Finally, the NFC card 101 comprises a power supply 137 coupled to the digital processing unit 134 and the matching circuit 136. When the security processing unit 132 is active, it emits a significant amount of EMD as indicated by arrow 138. The EMD 138 may be comparable in power to a data signal generated by the digital processing unit 134, which is indicated by arrow 139.

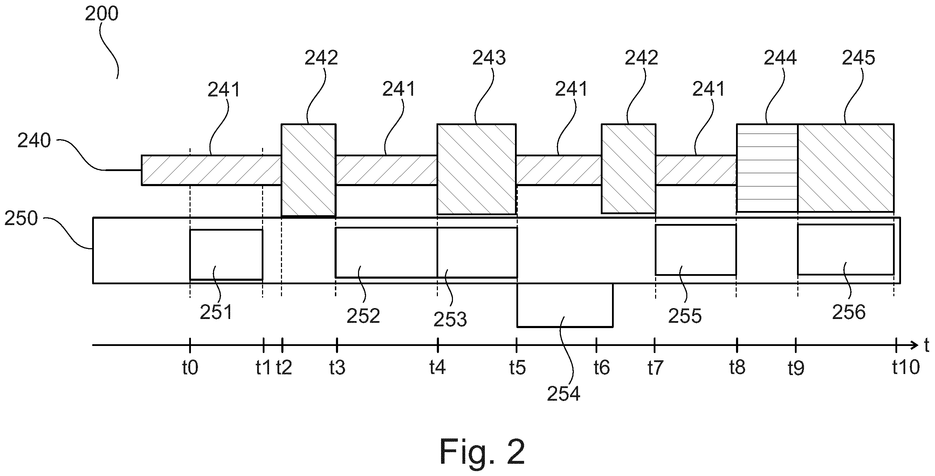

Figure 2 shows a flow diagram 200 illustrating communication between NFC card 101 and NFC reader 100 in accordance with an embodiment. More specifically, row 240 shows the state of the communication and row 250 shows corresponding actions with regard to control of receiver sensitivity. Furthermore, a time axis t is shown at the bottom of Figure 2.

At the beginning (to the far left in Figure 2), the RF field is in an idle state as indicated by reference numeral 241 and an estimation of channel noise is initiated by the reader device 100 at time t=t0 and finalized at time t=t1. The estimated channel noise level corresponds to the internal noise in the reader 100 and does not include EMD 138. Then, at time t=t2, the reader device 100 begins transmission of a PCD (proximity coupling device) frame 242 to NFC card 101, i.e. a polling message. The transmission is completed at time t=t3 and then the RF field returns to the idle state 241 and the result of the channel noise estimation is used to set a maximum sensitivity for the receiver in the reader 100. At time t=t4, the card 101 responds to the PCD frame 242 by initiating transmission of a PICC (proximity integrated circuit card) frame 243. While receiving this data signal 243 at the reader 100, the signal strength (load modulation amplitude or LMA) is tracked, i.e. repeatedly measured. When reaching end-of-frame at t=t5, the RF field returns to the idle state 241 and the measured values of the signal strength are processed to yield a resulting value of the signal strength, such as a minimum value, an average value and/or an average value. The resulting value may be stored in memory (not shown). At time t=t6, the reader 100 transmits a new polling signal or PCD frame 242. This transmission is completed at time t=t7 where the RF field returns to the isdle state 241 and the receiver sensitivity of the reader 100 is set based on the previously determined resulting signal strength value in order to prepare for optimal receiving conditions. At time t=t8, i.e. before the card 101 responds to the most recent PCD frame 242, a burst of EMD 244 is generated and emitted by the security co-processor 132 of the card 101. Then, at time t=t9, the card 101 begins transmitting a further PICC frame 245 and the reader device 100 tracks the corresponding signal strength in the same way as before until end-of-frame is reached at time t=t10. From this point in time, the preceding steps may be repeated as necessary and appropriate, such that the receiver sensitivity is always adapted in view of the signal strength measured during the preceding receiving process. The adaptation (or adjustment) of the receiver sensitivity based on the signal strength of the previously received data signal from the card 100 aims at assuring that the receiver is operating in the linear range without clipping or loss of signal due to noise. Thereby, the risk of mistaking an EMD burst 244 and a PICC frame 242 or 245 is significantly reduced and the overall reader receiver performance is correspondingly improved. In cases where the received signal strength is too weak or too strong to allow effective adaptation, the reader device 100 may send a request for increasing or reducing the LMA to the card 101, in particular if the card is an active card.

It is noted that, unless otherwise indicated, the use of terms such as "upper", "lower", "left", and "right" refers solely to the orientation of the corresponding drawing.

It is noted that the term "comprising" does not exclude other elements or steps and that the use of the articles "a" or "an" does not exclude a plurality. Also elements described in association with different embodiments may be combined. It should also be noted that reference signs in the claims should not be construed as limiting the scope of the claims.

## Claims

1. A method of operating an NFC reader device to receive data from an NFC card, the method comprising
receiving, at the NFC reader device, a data signal transmitted by the NFC card,
determining a signal strength of the received data signal, and
adapting a receiver sensitivity of the reader device based on the determined signal strength.

2. The method according to the preceding claim, further comprising
estimating a channel noise level at the reader device,
determining an initial receiver sensitivity for the reader device based on the estimated channel noise level, and
applying the initial receiver sensitivity to the reader device prior to receiving the data signal transmitted by the NFC card.

3. The method according to any of the preceding claims, wherein determining the signal strength comprises
obtaining a plurality of signal strength measurement values during the receiving of the data signal, and
processing the plurality of signal strength measurement values.

4. The method according to the preceding claim, wherein the processing comprises determining at least one of a maximum value, a minimum value and an average value based on the plurality of signal strength measurement values.

5. The method according to any of the preceding claims, wherein adapting the receiver sensitivity comprises
determining an updated receiver sensitivity based on the determined signal strength, and
applying the updated receiver sensitivity to the reader device prior to receiving a further data signal transmitted by the NFC card.

6. The method according to the preceding claim, further comprising storing the updated receiver sensitivity in a memory of the reader device.

7. The method according to any of the preceding claims, further comprising
if the determined signal strength is below a lower threshold value: transmitting, from the reader device to the NFC card, a request for increasing transmission signal strength, and/or
if the determined signal strength is below an upper threshold value: transmitting, from the reader device to the NFC card, a request for reducing transmission signal strength.

8. An NFC reader device, comprising
a receiver configured to receive a data signal transmitted by an NFC card, and
a processing unit configured to
determine a signal strength of the received data signal, and
adapt a receiver sensitivity of the receiver based on the determined signal strength.

9. The device according to the preceding claim, further comprising a channel noise estimator configured to estimate a channel noise level, wherein the processing unit is further configured to
determine an initial receiver sensitivity based on the estimated channel noise level, and
apply the initial receiver sensitivity to the receiver prior to receiving the data signal transmitted by the NFC card.

10. An NFC communication system, comprising
an NFC reader device according to claim 8 or 9, and
an NFC card configured to transmit a data signal to the NFC reader device.
